# EUROPÄISCHE PATENTSCHRIFT

(11) **EP 1 084 787 B1**
(45) Veröffentlichungstag und Bekanntmachung des Hinweises auf die Patenterteilung: **30.03.2005**
(21) Anmeldenummer: 00119713.6
(22) Anmeldetag: 09.09.2000
(51) Int. Cl.: B23K 26/00, B23K 26/32, B23K 33/00, B21C 37/08

(54) **Fügestelle für laserverschweisste Bauteile**
Joining of laser welded workpieces
Assemblage de pièces soudées par laser

(30) Priorität: 13.09.1999 DE 19943752
(43) Veröffentlichungstag der Anmeldung: 21.03.2001
(73) Patentinhaber: Bayerische Motoren Werke Aktiengesellschaft, 80809 München (DE)
(72) Erfinder: Kraus, Florian, 80939 München (DE); Hornig, Johann, 83536 Gars (DE); Brachvogel, Michael, 81679 München (DE)

(56) Entgegenhaltungen:
- EP-A- 0 771 605
- EP-A- 1 005 944
- DE-A- 3 909 471
- DE-A- 4 407 190
- US-A- 4 682 002

## Beschreibung

Die Erfindung bezieht sich auf eine Fügestelle für laserverschweißte Bauteile, nach dem Oberbegriff des Patentanspruchs 1. Eine solche Fügestelle ist aus der DE 44 07 190 A1 bekannt.

Zum Verschweißen von dünnwandigen und/oder nur von einer Seite aus zugänglichen oder unter Wärmeeinwirkung verzugsempfindlichen Bauteilen kommt häufig allein eine Laserstrahlschweißung in Form eines Überlappstoßes in Betracht. So werden innenhochdruckverformte Hohlträger für Kraftfahrzeugkarosserien in der Weise rechtwinklig miteinander verbunden, dass am einen Hohlträger endseitig nach außen abgestellte Flansche angeformt werden, die dann über eine oder mehrere Überlappnähte mit dem anderen Hohlträger laserverschweißt werden. Während hierdurch bei Reinmetallbauteilen, also etwa Stahl- oder Aluminium-Hohlträgern, hochfeste Schweißverbindungen erhalten werden, zeigen derartig laserverschweißte, verzinkte Blech- oder ähnlich oberflächenbeschichtete Bauteile eine erheblich verminderte Schweißqualität. Selbst wenn die Fügeflächen der Bauteile, wie z. B. aus der DE 44 07 190 A1 bekannt, vor dem Schweißvorgang längs des geplanten Schweißnahtverlaufs mit quer zur Nahtrichtung positionierten Kammern in Form von Oberflächenstrukturen zur Aufnahme der unter Laserstrahlwirkung entstehenden Beschichtungsdämpfe versehen werden, kommt es insbesondere bei Bauteilen, die an beiden Fügeflächen beschichtet sind, zu höchst störenden Instabilitäten im Schweißprozess und dadurch zu örtlichen Poren- oder Kraterbildungen in der Schweißverbindung, die vor allem bei höher beanspruchten Bauteilen aus Qualitätsgründen nicht hingenommen werden können.

Aufgabe der Erfindung ist es, eine Fügestelle für oberflächenbeschichtete Bauteile der eingangs genannten Art so zu gestalten, dass durch eine Laserstrahlschweißung in Überlappstoßform eine qualitativ hochwertige und vor allem hochfeste Bauteilverbindung auf prozesstechnisch einfache Weise erhalten wird.

Diese Aufgabe wird erfindungsgemäß durch die Fügestelle gemäß Patentanspruch 1 gelöst.

Bei der erfindungsgemäß gestalteten Fügestelle sind die Fügeflächen von einer Vielzahl beidseitig nach außen offener und auch durch den Schweißprozess nicht verschlossener Entgasungskanäle durchzogen, durch die die entstehende Überlapp-Laserschweißnaht gezielt in dicht aufeinanderfolgende, an beiden Enden freigehaltene Teilstücke aufgespalten wird, wodurch einerseits ein ungestörter Abfluss der ausgasenden Oberflächenbeschichtung und damit eine gleichbleibend gute Schweißqualität gewährleistet ist, andrerseits aber nahezu ebenso hohe Festigkeitswerte wie bei einer durchgehenden Laserstrahlschweißung von Reinmetallbauteilen erreicht werden, mit dem weiteren, unter dem Aspekt eines wirksamen Korrosionsschutzes wesentlichen Effekt, dass nicht nur die Größe der korrosionsempfindlichen Kontaktflächen durch den Flächenanteil der Entgasungskanäle merklich verringert, sondern über diese nachträglich auch problemlos, etwa im Wege des Tauchverfahrens, ein Korrosionsschutzmittel zwischen die Fügeflächen eingebracht werden kann. Erfindungsgemäß lassen sich somit dünnwandige, oberflächenbeschichtete Hohlkörper und insbesondere innenhochdruckverformte Karosserie-Hohlträger, auf prozesstechnisch einfache, qualitativ hochwertige Weise homogen miteinander verschweißen.

Im Hinblick auf eine fertigungsmäßig einfache Gestaltung ist die Fügefläche des einen Bauteils nach Anspruch 2 vorzugsweise planar ausgebildet und die Fügefläche des anderen Bauteils mit sickenförmig eingeprägten Entgasungskanälen versehen, und aus dem gleichen Grund sind die Entgasungskanäle nach Anspruch 3 vorzugsweise bei der Bauteilverformung mitausgeformt.

Anhand eingehender Untersuchungen hat es sich als besonders vorteihaft erwiesen, dass nach Anspruch 4 die Einzellänge der jeweils zwischen zwei Entgasungskanälen liegenden Schweißnaht-Teilstücke zwischen 2,5 und 5 mm beträgt, die Entgasungskanäle nach Anspruch 5 eine Tiefe zwischen 1 und 8 mm besitzen und dass das Verhältnis der Breite der Entgasungskanäle zur Länge der dazwischenliegenden Schweißnaht-Teilstücke zwischen 0,4 und 1 bemessen ist.

Weitere Merkmale der Erfindung ergeben sich aus der nachfolgenden, beispielsweisen Beschreibung der Erfindung in Verbindung mit den Zeichnungen. Diese zeigen in stark schematisierter Darstellung:
- **Fig. 1**: eine perspektivische Ansicht zweier miteinander zu verschweißender, doppelseitig verzinkter Hohlträger vor dem Zusammenbau;
- **Fig. 2a,b**: einen Teilschnitt der Hohlträger im zusammengespannten Zustand längs der Linie II-II der Fig. 1 vor (Fig. 2a) bzw. nach dem Verschweißen (Fig. 2b); und
- **Fig. 3a,b**: eine der Fig.2 entsprechende Darstellung einer abgewandelten Fügeflächenform.

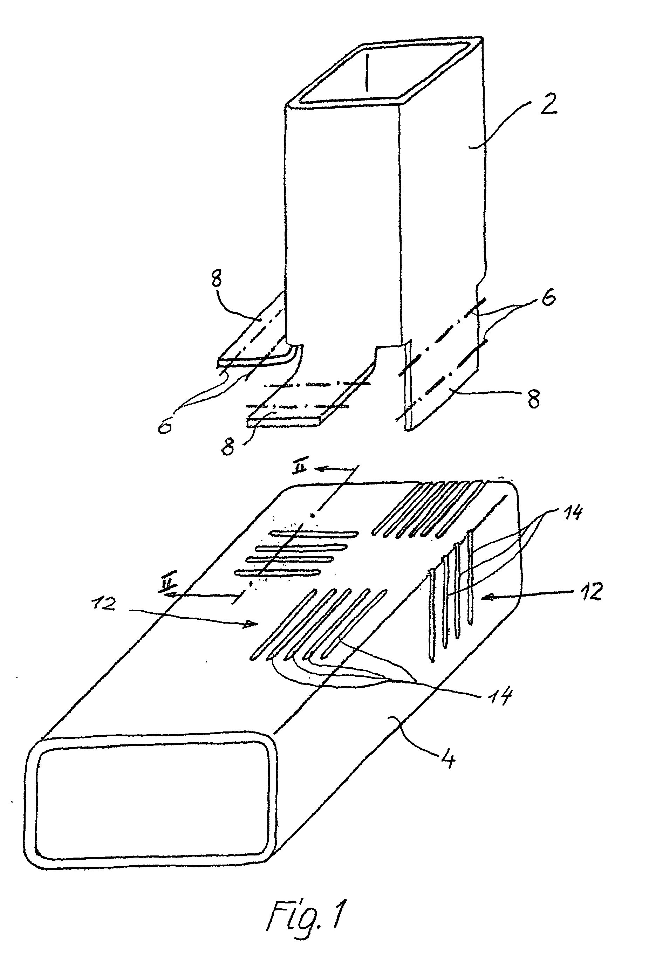

In Fig. 1 ist eine Fügestelle für zwei doppelt verzinkte, z. B. aus Stahl im Innenhochdruckverfahren hergestellte Hohlträger 2, 4 gezeigt, die über - in Fig. 1 strichpunktiert dargestellte - Überlapp-Laserschweißnähte 6 rechtwinklig miteinander verbindbar sind. Zu diesem Zweck sind am Hohlträger 2 abgestellte Flanschabschnitte 8 angeformt, die mit planaren (in Fig.1 nicht ersichtlichen) Fügeflächen 10 versehen sind, welche im zusammengespannten Zustand der Bauteile 2, 4 an korrespondierenden Fügeflächen 12 des Hohlträgers 4 anliegen.

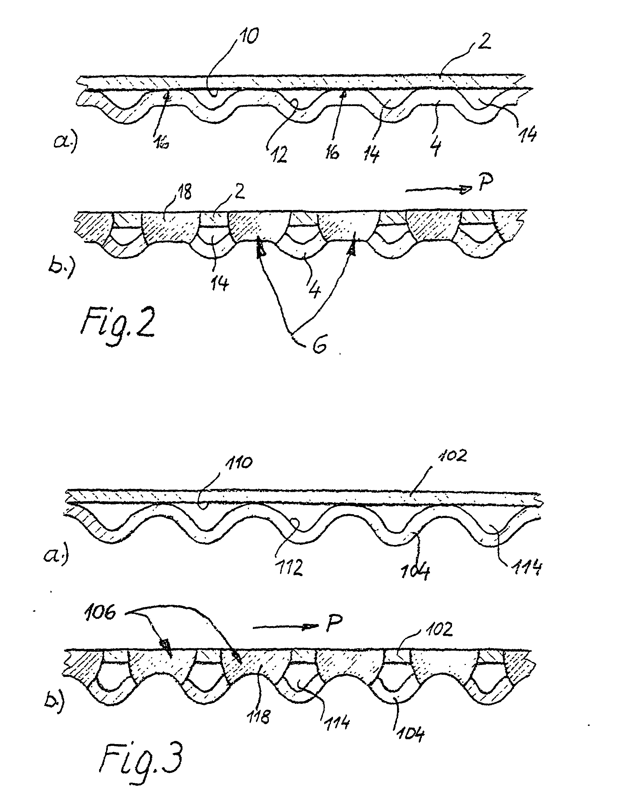

In die Fügeflächen 12 des Hohlträgers 4 sind beim Umformprozeß quer zur geplanten Schweißnaht 6 verlaufende Entgasungskanäle 14 miteingeformt, die sich bis zum Rand des gegenseitigen Überlappungsbereichs der Fügeflächen 10, 12 erstrecken und beidseitig nach außen geöffnet sind. Wie Fig.2 am deutlichsten zeigt, sind die Entgasungskanäle 14 als sickenförmige, im Querschnitt konkav gewölbte Vertiefungen ausgebildet, die die Fügefläche 12 in eine Vielzahl voneinander abgegrenzter, planarer Flächenstücke 16 unterteilen.

Die Entgasungskanäle 14 sind so gestaltet, dass die beim kontinuierlichen Vorschub des Laserstrahls in Pfeilrichtung P erzeugte Überlappnaht 6 an den einzelnen Entgasungskanälen 14 unterbrochen ist, so dass eine dichte Folge von diskreten Schweißnaht-Teilstücken 18 (Fig. 2 b) entsteht, an deren jeweiligen Enden die sich beim Schweißprozess bildenden Beschichtungsdämpfe über die vom Schmelzbad freigehaltenen und zu beiden Seiten offenen Entgasungskanäle 14 ungehindert nach außen abströmen können. Auf diese Weise ergibt sich eine äußerst homogene, qualitativ hochwertige Schweißverbindung mit nahezu ebenso großer Festigkeit wie bei einer durchgehenden Laserstrahlschweißung von unbeschichteten Bauteilen.

Bei einem konkreten Ausführungsbeispiel wurden doppelt verzinkte Bauteile mit einer Wandstärke von 1.4 mm und einer Fügefläche 12 mit einem Mittenabstand der Entgasungskanäle 14 von etwa 9,5 mm, einer Kanaltiefe von 1,5 mm und einer Breite der Fügeflächenabschnitte 16 von ca. 4 mm miteinander verschweißt und dann Zugschwelluntersuchungen ausgesetzt. Dabei wurden für 10⁵ Lastwechsel Zugspannungswerte von über 160 N/mm² erreicht.

In Fig. 3, wo die dem ersten Ausführungsbeispiel entsprechenden Komponenten durch ein um 100 erhöhtes Bezugszeichen gekennzeichnet sind, ist eine abgewandelte Fügeflächenform gezeigt. Hier ist die Fügefläche 112 wellenförmig gestaltet, so dass sich im zusammengespannten, unverschweißten Zustand ein linienförmiger Fügeflächenkontakt ergibt. Die sich unter der Laserstrahlwirkung bildenden, diskreten Schweißnaht-Teilstücke 118 reichen jedoch über die Kontaktstellen der Fügeflächen 110, 112 hinaus und erstrecken sich bis in die Flankenbereiche der Entgasungskanäle 114 (Fig.3 b). Bei einem konkreten Ausführungsbeispiel mit einer Bauteil-Wandstärke von 2 mm, einem Mittenabstand der Wellenberge von 12 mm und einer maximalen Kanaltiefe von 6 mm lag das Verhältnis der Länge der einzelnen Nahtstücke 118 zur Länge der unverschweißten Teilstrecken, also zur Breite der Entgasungskanäle 114 nach dem Schweißprozess, bei etwa 1,3, und auch hier wurden wiederum ausgezeichnete Schweißergebnisse und vor allem Festigkeitswerte erzielt.

Ein weiterer, für einen wirksamen Korrosionsschutz wesentlicher Aspekt der beschriebenen Fügestellen liegt darin, dass durch die Dimensionierung der von der Überlappnaht freigehaltenen Entgasungskanäle 14 bzw. 114 nicht nur die Größe der korrosionsempfindlichen Kontaktflächen an der Fügestelle verringert, sondern über die offenen Kanalenden nachträglich auch problemlos ein Korrosionsschutzmittel, etwa im Wege der Tauchlackierung, zwischen die Fügeflächen eingebracht werden kann.

## Patentansprüche

1. Fügestelle für oberflächenbeschichtete, durch zumindest eine Überlappnaht (6; 106) laserverschweißte Bau-, insbesondere verzinkte Blechformteile, mit quer zur Überlappnaht (6; 106) verlaufenden Entgasungskanälen (14; 114) für die beim Schweißprozess entstehenden Beschichtungsdämpfe,
wobei die Entgasungskanäle (14;114) im verschweißten Zustand der Bauteile (2,4;102;104) im Überlappungsbereich einschließlich der Überlappungsnaht (6;106) durchgehend freigehalten und beidseitig nach außen geöffnet sind und wobei
sich die Entgasungskanäle (14; 114) bis zum Rand des gegenseitigen Überlappungsbereichs der Bauteile (2, 4; 102, 104) erstrecken **dadurch gekennzeichnet, dass** die vom Laserstrahl erzeugte Überlappnaht (6; 106) an den einzelnen Entgasungskanälen unterbrochen ist und somit eine Folge von diskreten Schweißnaht-Teilstücken (18; 118) bildet.

2. Fügestelle nach Anspruch 1, **dadurch gekennzeichnet, dass**
die Fügefläche (10; 110) des einen Bauteils (2; 102) planar ausgebildet und die Fügefläche (12; 112) des anderen Bauteils (4; 104) mit sickenförmig gestalteten Entgasungsknälen (14; 114) versehen ist.

3. Fügestelle nach Anspruch 1 oder 2, **dadurch gekennzeichnet, dass**
die Entgasungskanäle (14; 114) bei der Bauteilverformung mitausgeformt sind.

4. Fügestelle nach einem der vorhergehenden Ansprüche, **dadurch gekennzeichnet, dass**
die Einzellänge der jeweils zwischen zwei Entgasungskanälen (14; 114) liegenden Schweißnaht-Teilstücke (18; 118) zwischen 2,5 und 5 mm liegt.

5. Fügestelle nach einem der vorhergehenden Ansprüche, **dadurch gekennzeichnet, dass**
die Entgasungskanäle (14; 114) eine Tiefe zwischen 1 und 8 mm besitzen.

6. Fügestelle nach einem der vorhergehenden Ansprüche, **dadurch gekennzeichnet, dass**
das Verhältnis der Breite der Entgasungskanäle (14;114) zur Länge der dazwischenliegenden Schweißnaht-Teilstücke (18; 118) zwischen 0,4 und 1 beträgt.

## Claims

1. A joint between surface-coated components, especially galvanised sheet-metal moulded parts, welded by a laser in a lap joint (6; 106), with degassing ducts (14; 114) extending transversely of the lap joint (6; 106) for the vapours evolved from the coating during the welding process, wherein the degassing ducts (14; 114) are kept open all along their length in the lap region including the lap joint (6; 106) when in the welded state and are open to the exterior at both ends and wherein the degassing ducts (14; 114) extend to the end of the opposite lap region of the components (2, 4; 102, 104), **characterised in that** the lap joint (6; 106) produced by the laser beam is interrupted at the individual degassing ducts and thus forms a sequence of discrete partial welds (18; 118).

2. A joint according to claim 1, **characterised in that** the surface (10; 110) for joining of one component (2; 102) is flat and the surface (12; 112) for joining of the other component (4; 104) has degassing ducts (14; 114) in the form of corrugations.

3. A joint according to claim 1 or 2, **characterised in that** the degassing ducts (14; 114) are formed during the shaping of the component.

4. A joint according to any of the preceding claims, **characterised in that** the individual lengths of each part-seam (18; 118) between each pair of degassing ducts (14; 114) is between 2.5 and 5 mm.

5. A joint according to any of the preceding claims, **characterised in that** the degassing ducts (14; 114) have a depth between 1 and 8 mm.

6. A joint according to any of the preceding claims, **characterised in that** the ratio of the width of the degassing ducts (14; 114) to the length of the part-welds (18; 118) in between is 0.4 to 1.

## Revendications

1. Assemblage pour des pièces recouvertes sur leur surface et soudées par laser par au moins une soudure à recouvrement (6 ; 106), notamment pour des pièces de tôle galvanisées, avec des canaux de dégazage (14 ; 114) s'étendant transversalement à la soudure à recouvrement (6 ; 106) pour les vapeurs de revêtement générées lors du procédé de soudage, les canaux de dégazage (14 ; 114) étant dégagés en continu à l'état soudé des pièces (2, 4 ; 102, 104) dans la zone de recouvrement, y compris de la soudure à recouvrement (6 ; 106), et ouverts des deux côtés vers l'extérieur, s'étendant jusqu'au bord de la zone opposée de recouvrement des composants (2, 4 ; 102, 104),
**caractérisé en ce que**
la soudure à recouvrement (6 ; 106) générée par le rayon laser est interrompue sur les différents canaux de dégazage et forme ainsi une série de tronçons de soudure (18 ; 118) discrets.

2. Assemblage selon la revendication 1,
**caractérisé en ce que**
la surface d'assemblage (10 ; 110) d'une pièce (2 ; 102) est plane et que la surface d'assemblage (12 ; 112) de l'autre pièce (4 ; 104) est pourvue de canaux de dégazage (14 ; 114) conçus sous forme de moulure.

3. Assemblage selon la revendication 1 ou 2,
**caractérisé en ce que**
les canaux de dégazage (14 ; 114) sont déformés en même temps que la pièce.

4. Assemblage selon l'une quelconque des revendications précédentes,
**caractérisé en ce que**
la longueur individuelle des tronçons de soudure (18 ; 118) situés respectivement entre deux canaux de dégazage (14 ; 114) est comprise entre 2,5 et 5 mm.

5. Assemblage selon l'une quelconque des revendications précédentes,
**caractérisé en ce que**
les canaux de dégazage (14 ; 114) ont une profondeur comprise entre 1 et 8 mm.

6. Assemblage selon l'une quelconque des revendications précédentes,
**caractérisé en ce que**
le rapport de la largeur des canaux de dégazage (14 ; 114) et de la longueur des tronçons de soudure (18 ; 118) insérés entre ces canaux est compris entre 0,4 et 1.
